# EUROPEAN PATENT APPLICATION

(11) **EP 0 646 786 A1**
(43) Date of publication of application: **05.04.1995**
(21) Application number: 94402187.2
(22) Date of filing: 29.09.1994
(51) Int. Cl.: G01N 23/203

(54) **Improved ion scattering spectroscopy and apparatus for the same**

(30) Priority: 29.09.1993 JP 265709/93
(71) Applicant: SUMITOMO ELECTRIC INDUSTRIES, LIMITED, Osaka 541 (JP)
(72) Inventor: Fujimoto, Takeshi, F-75116 Paris (FR); Iiyama, Michitomo, F-75116 Paris (FR); Nakamura, Takao, F-75116 Paris (FR)
(74) Representative: Ballot, Paul Denis Jacques

(57) **Abstract**

The present invention provides an improved ion scattering spectroscopy for analyzing a sample surface under ultra high vacuum comprising steps of irradiating an ion beam of a small mass number inert gas (preferably helium, acceleration energy preferably equal to or smaller than 1keV) onto the sample surface, analyzing distribution of energy of ions scattered by the sample surface, irradiating an ion beam of a relatively large mass number inert gas (preferably neon or argon, acceleration energy preferably equal to or smaller than 1keV) onto the sample surface so as to remove one atomic layer from the sample surface, irradiating an ion beam of the small mass number inert gas to the newly exposed sample surface and analyzing distribution of energy of ions scattered at the newly exposed sample surface.

## Description

### Background of the Invention

### Field of the invention

The present invention relates to improved ion scattering spectroscopy and an apparatus for the ion scattering spectroscopy, and more specifically to improved ion scattering spectroscopy and an apparatus which can analyze the geometrical position and the composition of surface atoms layer by layer.

### Description of related art

Ion scattering spectroscopy is a surface analysis in which accelerated ions irradiate a surface of a sample and spectra of scattered ion is measured so as to analyze surface composition and geometrical position of surface atoms. Ion scattering spectroscopy includes two representative types of which the one is LEISS (Low Energy Ion Scattering Spectroscopy) and the other is RBS (Rutherford Backscattering Spectroscopy).

In general, LEISS utilizes low energy He⁺, Ne⁺ or Ar⁺ ions of the order of kilo electron volts or less, and RBS utilizes high energy H⁺ or He⁺ ions of the order of mega electron volts. LEISS is effective for analysis of one atomic layer at an outermost surface of a sample in a composition and geometrical position of surface atoms. On the other hand, RBS can analyze a sample from its top surface to deep into micro meters range. However, only mean values for relatively thick region of the order of a few ten nanometers can be obtained by RBS.

In a prior art, in order to conduct precise analysis of a sample from its surface to a distance deep from its surface, the following process is repeated; analyzing the surface of the sample by LEISS, removing the analyzed atomic layers by an Ar ion milling or a reactive ion etching and then analyzing an exposed surface again by LEISS.

However, according to the above conventional process, it is very difficult to conduct a fine control of a removed thickness from the surface of the sample in order of the atomic layer. Therefore, it is almost impossible to evaluate the sample precisely on distribution of composition from its surface with atomic layer accuracy.

In addition, the exposed surface of the sample by sputtering or etching has a high potential and is chemically active so as to react easily with residual gases (the sputtering and etching are done with considerably higher pressure than LEISS). Therefore, the exposed surface of the sample is easily degraded with these gases so that the analysis tends to be present as meaningless data. Furthermore, crystal perfection may often be destroyed by the sputtering or etching and elements of the sputtering or etching gases or elements apart from surface may stick to the exposed surface. These also affect adversely on an accuracy of the analysis.

### Summary of the Invention

Accordingly, it is an object of the present invention to provide an improved ion scattering spectroscopy which has overcome the above mentioned defect of the conventional one.

Another object of the present invention is to provide an apparatus for the ion scattering spectroscopy.

The above and other objects of the present invention are achieved in accordance with the present invention by an improved ion scattering spectroscopy for analyzing a sample surface under ultra high vacuum comprising steps of irradiating an ion beam of a small mass number inert gas onto the sample surface, analyzing distribution of energy of ions scattered by the sample surface, irradiating an ion beam of a relatively large mass number inert gas onto the sample surface so as to remove one atomic layer from the sample surface, irradiating an ion beam of the small mass number inert gas to the newly exposed sample surface and analyzing distribution of energy of ions scattered at the newly exposed sample surface.

According to the present invention, it is preferable that distribution of energy of ions of the relatively large mass number inert gas scattered by the sample surface is analyzed after monolayer peeling is conducted. It is also preferable that the ion scattering spectroscopy further comprising steps of irradiating an ion beam of a different inert gas onto the sample surface and analyzing distribution of energy of ions scattered at the sample surface before peeling.

The ion beams are preferably accelerated by an energy of equal to or smaller than 1 keV so as to prevent damage of the sample during the analysis and so as to remove one atomic layer of the sample surface accurately.

According to another aspect of the present invention, there is provided an apparatus for ion scattering spectroscopy comprising a vacuum chamber provided with an evacuating means by which the vacuum chamber can be evacuated to a high vacuum of a pressure of lower than 1 × 10⁻⁹ Torr, a sample holder on which a sample is attached, an ion gun emitting ion beams at least two different inert gases onto the sample and a detector analyzing energy distribution of ions scattered at a sample surface.

It is preferable that the apparatus further comprises a manipulator of five degrees of freedom by which the sample can change its position by five degrees of freedom, namely in x, y and z directions and at tilt and rotate angles. The ion gun is preferably able to change its position and angle so as to emit an ion beam to the sample at a predetermined angle. It is also preferable that the analyzer can change its position and angle so as to analyze the energy distribution of ions scattered to an arbitral directions.

The above and other objects, features and advantages of the present invention will be apparent from the following description of preferred embodiments of the invention with reference to the accompanying drawings.

### Brief Description of the Drawings

Figure 1 is a schematic view of an apparatus in accordance with the present invention.

Figures 2A to 2C are graphs showing results of ion scattering spectroscopy in accordance with the present invention applied to surface analysis of a Y₁Ba₂Cu₃O_{7-δ} oxide superconductor thin film.

### Description of the Preferred embodiments

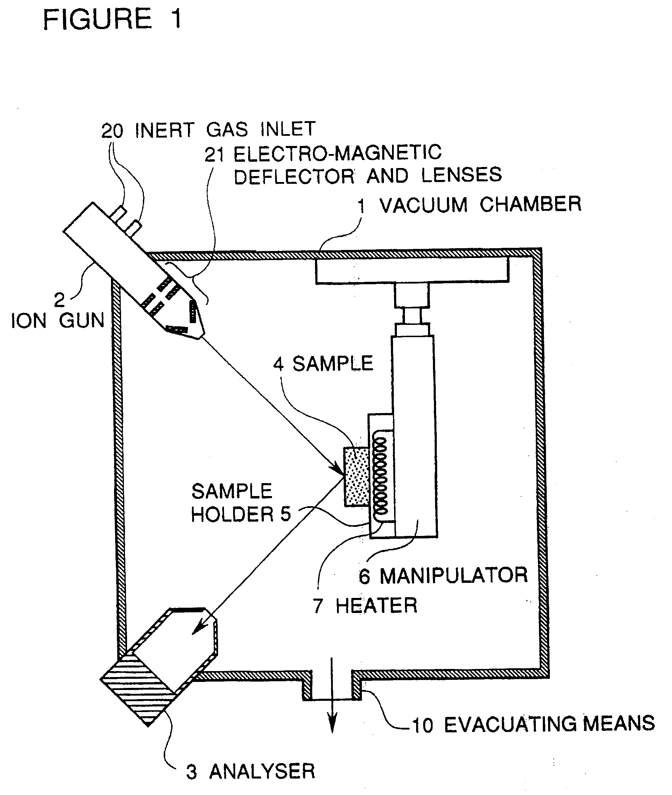

Referring to Figure 1, there is shown a schematic view of an ion scattering spectroscopy apparatus in accordance with the present invention. The apparatus shown in Figure 1 comprises a vacuum chamber 1 provided with an evacuating means 10 by which the vacuum chamber 1 can be evacuated to an ultra high vacuum of a pressure of lower than 1 × 10⁻⁹ Torr. The vacuum chamber 1 is also provided with an ion gun 2 on its one side and an analyzer 3 on its counter position. The ion gun 2 and the analyzer can be regulated in both their positions and angles. In addition, the vacuum chamber 1 is provided with a sample holder 5 attached to a manipulator 6, on which a sample 4 is fastened. The manipulator 6 has five degrees of freedom, so that it can finely move the sample 4 in the x, y and z directions and can finely rotate and tilt the sample 4. The sample holder 5 comprises a heater 7 which heats the sample 4.

The ion gun 2 comprises at least two inlets 20 through which different inert gases are supplied, and an electro-magnetic deflector and lenses 21. The injected inert gases are electron bombertmented in the ion gun 2 and the ionized gases are focussed so as to form ion beams of small diameters and scan by the electro-magnetic deflector and lenses 21. The ion gun 2 is also evacuated with a differential pumping.

The analyzer 3 is a known cylindrical mirror analyzer having two coaxial cylindrical electrodes (not shown).

According to the present invention, an ion beam of a relatively small mass number inert gas accelerated by low energy irradiates the sample 4 with a predetermined incident angle. Ions are partly scattered at the surface of the sample 4. Energy distribution of the scattered ions is evaluated by the analyzer 3 so that only a few monolayer from the sample surface is evaluated in its atomic composition and geometrical position of atoms. If necessary, the analyzer 3 are changed in its position and/or angle so as to analyze the energy distribution of scattered ions within the angle of predetermined range.

The inert gas and the acceleration energy is adjusted so that scattered ions from outermost monolayer of the sample surface can be detected with releasing the sample damages as little as possible. For example, the small mass number inert gas is preferably helium and the acceleration energy is preferably equal to or smaller than 1 keV, typically 500 eV is used. If helium ion beam of equal to or smaller than 1 keV irradiates the sample, the sample surface can be analyzed in its composition and geometrical position of surface atoms without damages.

Then, another ion beam of relatively large mass number inert gas irradiates the sample 4 at a predetermined incident angle so that the outermost monolayer of the sample surface is peeled off and simultaneously analyzed with different resolution. It is possible to conduct only analysis of the sample surface with different resolution or to only remove the monolayer of the sample surface by controlling acceleration energy.

The inert gas and the acceleration energy is determined so that only one atomic layer of the sample surface can be precisely removed. For example, the large mass number inert gas is preferably neon and the acceleration energy is preferably equal to or smaller than 1 keV, typically 500 eV is used. If neon ion beam of equal to or smaller than 1 keV is irradiates the sample, only one atomic layer of the sample surface can be peeled off. However, with precise regulation of acceleration energy and ion current, it is possible to use argon ion beam having a larger mass number.

According to the present invention, the above process is repeated so that the sample is analyzed layer by layer from its outermost in its composition and geometrical position.

The above analysis and peeling are preferably conducted with ultra high vacuum of a pressure of lower than 1 × 10⁻⁹ Torr. The ultra high vacuum prevents contaminations of an exposed surface with high potential after peeling the monolayer.

According to a preferred embodiment of the present invention, analyzed portions of the sample surface are scanned over the range of 5 x 5 square millimeters by deflecting the ion beam with a small diameter of around 1 millimeter and the incident angle was changed by ± 20° with rotating the sample. By this, an extremely fine portion (both two and three dimensional) of the sample surface can be analyzed so that the surface exposed after peeling can be precisely analyzed. The incident angle is 37.7° and and the ion scattering angle is 102.3° normally.

A surface of Y₁Ba₂Cu₃O_{7-δ} oxide superconductor thin film was analyzed by using the apparatus shown in Figure 1 in accordance with the present invention. It is known that Y₁Ba₂Cu₃O_{7-δ} crystal is a secondary crystal having a perovskite type crystal structure. The sample Y₁Ba₂Cu₃O_{7-δ} oxide superconductor thin film was an almost single crystal thin film having a thickness of 100 nanometers deposited on a SrTiO₃ (100) substrate by reactive co-evaporation method. The SrTiO₃ (100) substrate was fastened on the sample holder 5 and transferred into the vacuum chamber 1 through an ultra high vacuum transportation apparatus. The sample holder 5 was set on the manipulator 6.

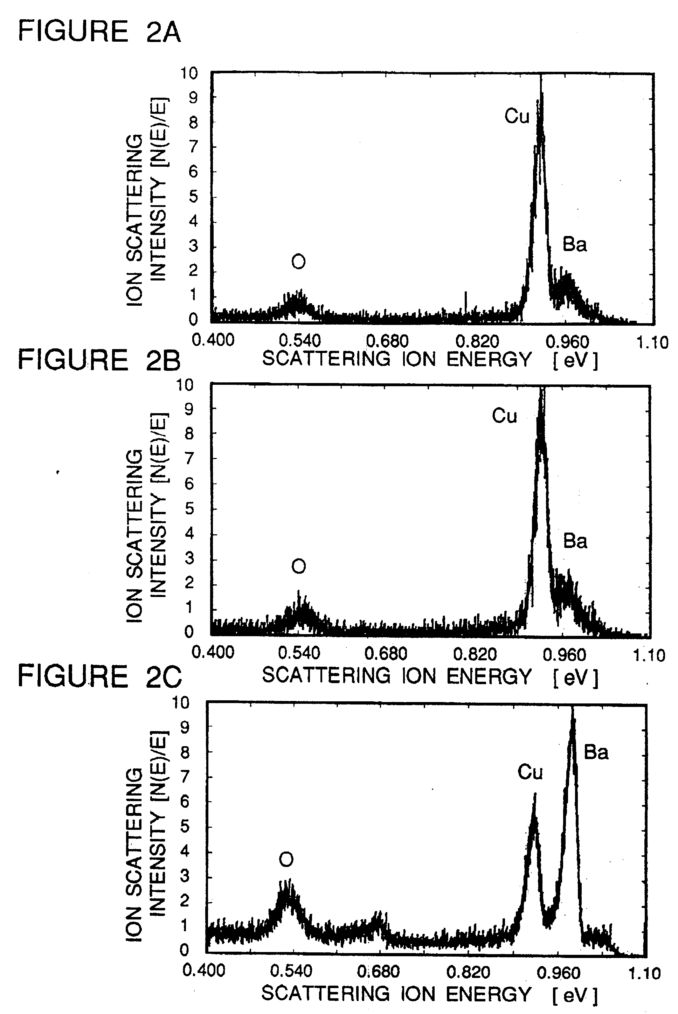

The vacuum chamber 1 was then isolated from the transportation apparatus and evacuated to 1 × 10⁻¹⁰ Torr. A helium ion beam of 500 eV irradiated the sample Y₁Ba₂Cu₃O_{7-δ} oxide superconductor thin film by the ion gun 2 so as to analyze a sample surface. The results are shown in Figure 2A. Figure 2A is a graph showing spectra of scattered helium ions. As shown Figure 2A, scattered ions had energy lines corresponds to Cu and O atoms. It was clear that the most surface of the Y₁Ba₂Cu₃O_{7-δ} oxide superconductor thin film was covered with a Cu-O plane.

Then, a neon ion beam of 500 eV irradiated up to 10¹⁴/cm² onto the sample Y₁Ba₂Cu₃O_{7-δ} oxide superconductor thin film by the ion gun 2 so as to remove a portion of one atomic layer (Cu-O plane) of the sample surface. A newly exposed sample surface was analyzed by irradiating helium ion beam of 500 eV. The results are shown in Figure 2B. Figure 2B is a graph showing spectra of scattered helium ions like Figure 2A. As shown Figure 2B, scattered ions also had energy line corresponds to Cu and O atoms but with reduced intensity on Cu atoms and scattered energy line corresponds to barium increased compared with Figure 2A.

Thereafter, a neon ion beam of 500 eV was again irradiated with some 10¹⁴/cm² dose onto the sample Y₁Ba₂Cu₃O_{7-δ} oxide superconductor thin film by the ion gun 2 so as to remove the portion of one atomic layer of the sample surface. A newly exposed sample surface was again analyzed by irradiating helium ion beam of 500 eV. The results are shown in Figure 2C. Figure 2C is a graph showing spectra of scattered helium ions like Figures 2A and 2B. As shown Figure 2C, the largest scattered energy line was corresponds to barium. It was clear that the second atomic layer of the Y₁Ba₂Cu₃O_{7-δ} oxide superconductor thin film was composed of barium.

It is known that there are three cases on Cu-O plane termination of Y₁Ba₂Cu₃O_{7-δ} oxide superconductor:
(1) Cu(1)-O chains,
(2) the Cu(2)-O₂ plane above the Y atom along the c direction and
(3) the Cu(2)-O₂ plane above the Ba atom.

Inventors also confirmed that the intensity of energy line corresponds to O atom from a surface of as-deposited Y₁Ba₂Cu₃O_{7-δ} oxide superconductor thin film decreased after annealed at 500 °C for 5 minutes (T. Nakamura et al. Extended Abstr. of ISS '93, pp. 833 (1993)).

By the above analysis, it became clear that the Y₁Ba₂Cu₃O_{7-δ} oxide superconductor thin film was terminated by Cu(1)-O chains, because Ba atoms existed beneath and oxygen easily escaped from Cu-O chains.

During the above analysis, the pressure of the vacuum chamber was constantly kept 1 × 10⁻¹⁰ Torr and every process was successively conducted.

The above process is applicable to producing a layered structure of which a lower film was terminated at the different surface portions from its nature. For example, in case of a layered structure of which a lower film is a SrTiO₃ film, a surface of the lower film of SrTiO₃ can have a Sr-O portion and a Ti-O portion. A layered film of which an upper film is partially deposited on the Sr-O portion of the surface of the lower film of SrTiO₃ and partially deposited on the Ti-O portion of the surface of the lower film of SrTiO₃ can be obtained. Therefore, the characteristics between two films were different with these two portions because of its schottky characteristics. In case of a layered structure of which a lower film is a Y₁Ba₂Cu₃O_{7-δ} oxide superconductor film, an upper film can be partially deposited on a Cu-O chain and on a Cu(2)-O₂ plane which cause the transportation characteristics difference.

As explained above, according to the present invention, there is provided an improved ion scattering spectroscopy which can analyze a sample surface layer by layer and an apparatus which can conduct the improved ion scattering spectroscopy. The improved ion scattering spectroscopy in accordance with the present invention utilizes ion beams of inert gases having relatively small mass numbers and low energy, so that precise analysis can be conducted without destroying the sample surface. In addition, since the sample surface is removed after peeling by an ion beam of relatively large mass number with low energy, the surface can be removed atomic layer by atomic layer. Furthermore, the analysis and the peeling are conducted successively so as to prevent contamination of a newly exposed surface having a high chemical potential so that a meaningful analysis can be conducted. It is also possible to deposit an upper film on the newly exposed surface having a high chemical potential so as to form a layered structure.

The invention has thus been shown and described with reference to the specific embodiments. However, it should be noted that the present invention is in no way limited to the details of the illustrated structures but changes and modifications may be made within the scope of the appended claims.

## Claims

1. An improved ion scattering spectroscopy for analyzing a sample surface under ultra high vacuum comprising steps of irradiating an ion beam of a small mass number inert gas onto the sample surface, analyzing distribution of energy of ions scattered by the sample surface, irradiating an ion beam of a relatively large mass number inert gas onto the sample surface so as to remove one atomic layer from the sample surface, irradiating an ion beam of the small mass number inert gas to the newly exposed sample surface and analyzing distribution of energy of ions scattered at the newly exposed sample surface.

2. An ion scattering spectroscopy as claimed in Claim 1; wherein distribution of energy of ions of the relatively large mass number inert gas scattered by the sample surface is analyzed after monolayer peeling is conducted.

3. An ion scattering spectroscopy as claimed in Claim 1; wherein the ion scattering spectroscopy further comprising steps of irradiating an ion beam of a different inert gas onto the sample surface and analyzing distribution of energy of ions scattered at the sample surface before peeling.

4. An ion scattering spectroscopy as claimed in Claim 1; wherein the steps are successively conducted without breaking the high vacuum.

5. An ion scattering spectroscopy as claimed in Claim 1; wherein the ion beams are accelerated by an energy of equal to or lower than 1 keV.

6. An apparatus for ion scattering spectroscopy comprising a vacuum chamber provided with an evacuating means by which the vacuum chamber can be evacuated to a high vacuum, a sample holder on which a sample is fastened, an ion gun emitting ion beams at least two different inert gases onto the sample and an analyzer analyzing energy distribution of ions scattered at a sample surface.

7. An apparatus as claimed in Claim 6; wherein the apparatus further comprises a manipulator of five degrees of freedom by which the sample can change its position by five degrees of freedom.

8. An apparatus as claimed in Claim 6; wherein the ion gun can change its position and angle so as to irradiate an ion beam to the sample at a predetermined angle.

9. An apparatus as claimed in Claim 6; wherein the analyzer can change its position and angle so as to analyze the energy distribution of ions scattered to a predetermined angle range at the sample.
